# EUROPÄISCHE PATENTSCHRIFT

(11) **EP 0 455 646 B1**
(45) Veröffentlichungstag und Bekanntmachung des Hinweises auf die Patenterteilung: **11.05.1994**
(21) Anmeldenummer: 90900857.5
(22) Anmeldetag: 06.12.1989
(51) Int. Cl.: B60T 8/26, B60T 8/32

(54) **ELEKTRONISCH GESTEUERTER BREMSKRAFTVERTEILER**
ELECTRONICALLY CONTROLLED BRAKE EFFORT PROPORTIONING SYSTEM
REPARTITEUR DE FREINAGE A COMMANDE ELECTRONIQUE

(30) Priorität: 24.01.1989 DE 3901923
(43) Veröffentlichungstag der Anmeldung: 13.11.1991
(73) Patentinhaber: ROBERT BOSCH GMBH, 70442 Stuttgart (DE)
(72) Erfinder: PAJONK, Peter, D-7141 Beilstein (DE); JONNER, Wolf-Dieter, D-7141 Beilstein (DE)
(86) Internationale Anmeldenummer: EP8901495
(87) Internationale Veröffentlichungsnummer: WO9008682

(56) Entgegenhaltungen:
- EP-A- 283 332
- DE-A- 3 440 541
- FR-A- 2 219 862
- GB-A- 2 118 651
- GB-A- 2 135 413
- GB-A- 2 137 709
- GB-A- 2 141 499

## Beschreibung

### Stand der Technik

Aus der Fig. 2 der DE-A1 34 40 541 ist ein elektronisch gesteuerter Bremkraftverteiler für ein diagonal liegendes Räderpaar bekannt, bei dem in der zur Bremse des Hinterrads führenden Leitung ein 2/2 Ventil eingeschaltet ist, das im stromlosen Zustand diese Leitung absperrt. Anhand der für die beiden Räder ermittelten Schlupfwerte wird der Bremsdruck an dem Hinterrad durch Ansteuerung des 2/2 Ventils mit Impulsen derart bemessen, daß der Hinterradschlupf unter dem des Vorderrads liegt.

Dem 2/2 Ventil ist eine Ventileinheit parallel geschaltet, die eine Bremsdruckeinsteuerung am Hinterrad auch ohne Ansteuerung des 2/2 Ventils zuläßt. Der damit einsteuerbare Druck ist jedoch begrenzt.

Aus der EP-A1-0283332 ist auch schon ein Antiblockierregelsystem bekannt, bei dem der Druck an den Bremsen von diagonal angeordneten Rädern gemeinsam geregelt wird.

### Vorteile der Erfindung

Die erfindungsgemäße Ausbildung und Ansteuerung des Ventils bringt eine weitere Verbesserung der Funktion bei sehr preisgünstiger Gestaltung. Es wird eine verbesserte Kraftschlußausnutzung der Hinterachse bei dem verwendeten Zweikanal-ABS erreicht.

### Figurenbeschreibung

Anhand der Zeichnung werden Ausführungsbeispiele der Erfindung erläutert

Es zeigen:
- Fig. 1: ein erstes Ausführungsbeispiel
- Fig. 2: ein Diagramm zur Erläuterung
- Fig. 3: ein weiteres Ausführungsbeispiel

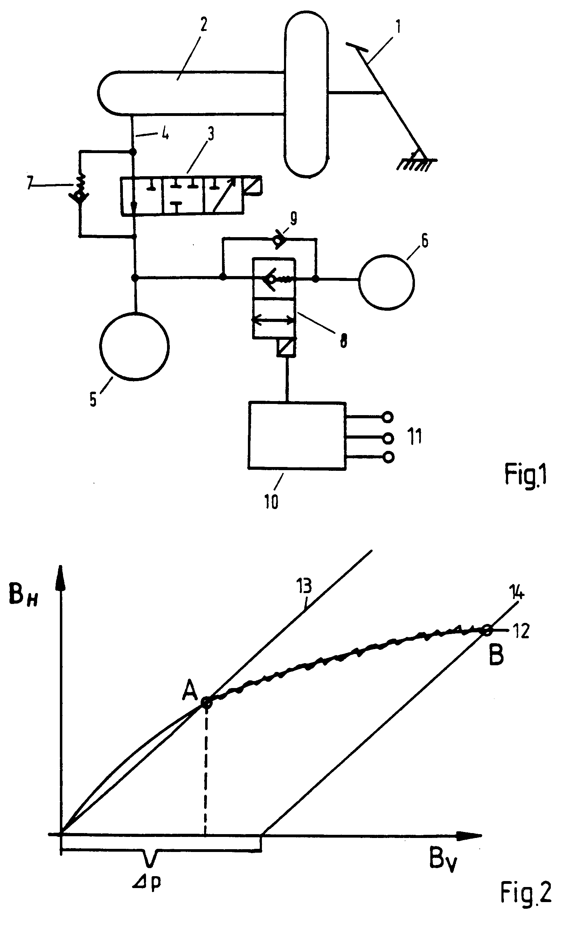

In Fig. 1 ist mit 1 ein Bremspedal und mit 2 eine Hauptbremszylinderanordnung für zwei Bremskreise bezeichnet. Es ist nur der Bremskreis für die eine Räderdiagonale dargestellt. Der andere Bremskreis ist analog aufgebaut. In die Bremsleitung 4 ist ein ABS-Bremsdrucksteuerventil 3 zur gemeinsamen Variation des Bremsdrucks an einem Vorderrad 5 und einem Hinterrad 6 eingeschaltet. Dieses Ventil 3 ist durch ein Rückschlagventil 7 überbrückt.

Zur Annäherung der Bremskraftverteilung an die ideale Bremskraftverteilung ist ein 2/2 Ventil 8 in die zur Hinterradbremse führenden Bremsleitung eingeschaltet, das im nicht angesteuerten Zustand ein Druckbegrenzungsventil wirksam macht. Dieses Ventil kann auch parallel zum 2/2 Ventil liegen. Es öffnet, wenn der anliegende Druck unterschied einen bestimmten Wert erreicht.

Um einen Druckabbau zu ermöglichen ist dem 2/2 Ventil ein Rückschlagventil 9 parallel geschaltet. Das 2/2 Ventil 8 wird von Steuergerät 10 angesteuert, dem über Klemmen 11 den Radgeschwindigkeiten entsprechende Signale und bei Bremsbetätigung ein weiteres Signal zugeführt werden.

Das Steuergerät 10 bewirkt mit Hilfe des Bremsbetätigungssignals, daß mit Betätigung der Bremse das Ventil 8 angesteuert wird und angesteuert bleibt bis ein Abbremsung von ca. 0,5 g erreicht ist. Das Erreichen dieses Punktes A (Fig. 2) ist durch die Bestimmung der Radschlüpfe erkennbar. Die Ansteuerung des 2/2 Ventils 8 kann auch durch Einschaltung der Zündung, Betätigung des Anlassers oder Betätigung eines Schalters, der im Bremskreis angeschaltet ist, erfolgen.

In Fig. 2 ist die ideale Bremskraftverteilerkennlinie mit 12 bezeichnet, die dem Fahrzeug mitgegebene, aber gegenüber dem Stand der Technik steilere Festabstimmungskennlinie mit 13. Bei der erfindungsgemäßen Ventilansteuerung folgt die Bremskraftverteilung zwischen 0 und dem Punkt A der Festabstimmungskennlinie 13. Danach wird die Abstimmung durch Ansteuern des 2/2 Ventils mit in der Breite oder der Frequenz variierenden Impulsen entlang der Kennlinie 12 variiert.

Das in der stromlosen Stellung des 2/2 Ventils 8, also bei Ausfall des Steuergerätes wirksame Druckbegrenzungsventil öffnet, wenn der Druckunterschied Δp ist. Es erzeugt eine Kennlinie 14, die um Δp versetzt parallel zur Kennlinie 13 verläuft. Δp wird nun derart gewählt, daß die ideale Verteilerkennlinie 12 im Punkt B bei einer Abbremsung von ca. 0,85 g geschnitten wird.

Zu beachten ist weiterhin, daß die Bremskraftverteilung so erfolgt, daß das Blockierdruckniveau des Vorderrads nie um mehr als den Öffnungsdruck des Druckbegrenzungsventils größer ist als das Blockierdruckniveau der Hinterachse, da das 2/2 Ventil 8 keine vollständige Sperrwirkung aufweist.

Durch die erfindungsgemäße Ausbildung wird bei einem 2-Kanal-ABS dessen Leistung verbessert.

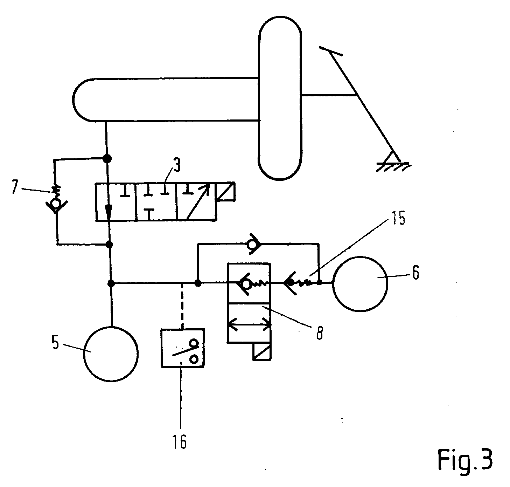

Das Ausführungsbeispiel der Fig. 3 unterscheidet sich von dem der Fig. 1 dadurch daß vor dem 2/2 Ventil 8 ein Druckmeßwertgeber 16 eingeschaltet ist, der ab Erreichen eines bestimmten kleinen Druckwerts ein Signal abgibt und durch ein weiteres Druckbegrenzungsventil 15 am Ausgang des 2/2 Ventils 8. Der Druckmeßwertgeber kann ein Druck-, Weg- oder Durchflußschalter sein. Bei seinem Ansprechen wird das Ventil 8 geschaltet.

Um Bremskraftverluste zu mindern, wird durch Bremssattelwahl die ideale Bremskraftverteilerkennlinie so gewählt, daß nur geringe Anteile der idealen Kennlinie oberhalb der installierten Verteilerkennlinie (Winkelhalbierende) liegt (siehe Fig. 2). Dann ist es jedoch vorteilhaft auch bei betätigtem Ventil 8 noch ein wirksames Druckminderventil 15 zu haben, das praktisch eine Parallelverschiebung der installierten Verteilerkennlinie 13 ähnlich der Linie 14 (Fig. 2) bewirkt. Dies bewirkt eine Stabilitätsverbesserung des Fahrzeugs auf niedrigem µ. Die Verwendung des Schalters 16 bewirkt, daß das Magnetventil 8 nur in Bremsphasen angesteuert wird. Die Hinterachse braucht außerdem nicht so stark überwacht werden.

## Patentansprüche

1. Elektronisch gesteuerter Bremskraftverteiler für die Bremsen eines diagonal angeordneten Fahrzeugräderpaares (5, 6), bei dem in die zur Hinterradbremse führende Bremsleitung ein Magnetventil (8) eingeschaltet ist, das im angesteuerten Zustand die Bremsleitung durchverbindet und im Ruhezustand den Durchlaß beeinträchtigt und das durch vom Radschlupf der beiden Räder (5, 6) in der Breite oder in der Frequenz abhängigen Impulsen zwecks geringerer Bremsdruckerzeugung an den Hinterrädern (6) entsprechend einer wenigstens näherungsweise idealen Bremskraftverteilung an den Hinterrädern angesteuert wird, wobei ein Ventil (in 8) vorgesehen ist, das auch bei nicht angesteuertem Magnetventil (8) einen Bremsdruckanstieg am Hinterrad (6) zuläßt, dadurch gekennzeichnet, daß bis zu einer vorgegebenen Abbremsung (von ca. 0,5 g) das Magnetventil (8) dauernd angesteuert ist, daß der dann wirksame Durchlaß derart bemessen ist, daß eine vorgegebene Festabstimmungsgerade (13) den Bremsdruckanstieg am Hinterrad (6) bestimmt, daß ab dieser vorgegebenen Abbremsung (Punkt A) die gepulste Ansteuerung erfolgt, daß das in der Ruhestellung des Magnetventils (8) wirksame Ventil (in 8) ein derart bemessenes Druckbegrenzungsventil (in 8) ist, daß es bei einem vorgegebenen Druckunterschied Δp öffnet und dann einen Durchlaß aufweist, durch den eine Druckabstimmungsgerade (14) mit der Steilheit der Festabstimmungsgerade (13) bedingt ist, und daß für beide Bremsen ein gemeinsamer ABS-Bremsdruckmodulator vorgesehen ist.

2. Bremskraftverteiler nach Anspruch 1, dadurch gekennzeichnet, daß das Druckbegrenzungsmittel (in 8) derart bemessen ist, daß die Festabstimmungsgerade (14) die ideale Bremskraftverteilungskennlinie (12) bei einer gegenüber 0,5 g höheren Abbremsung (von ca. 0,85 g) trifft.

3. Bremskraftverteiler nach Anspruch 1 oder 2, dadurch gekennzeichnet, daß die dauernde Ansteuerung durch die Betätigung des Bremspedals (1) ausgelöst wird.

4. Bremskraftverteiler nach Anspruch 1 oder 2, dadurch gekennzeichnet, daß die dauernde Ansteuerung durch die Einschaltung der Zündung oder die Betätigung des Anlassers ausgelöst wird.

5. Bremskraftverteiler nach Anspruch 1 oder 2, dadurch gekennzeichnet, daß die dauernde Ansteuerung durch das Signal eines an dem Bremskreis angeschalteten Schalters erfolgt.

6. Bremskraftverteiler nach einem der Ansprüche 1 bis 5, dadurch gekennzeichnet, daß die Durchlaßbemessung des Magnetventils (8) derart gewählt ist, daß die Festabstimmungsgerade (13) steiler als üblich gewählt ist.

7. Bremskraftverteiler nach Anspruch 5, dadurch gekennzeichnet, daß ein Druckfühler stromab von dem Magnetventil zur Messung des Drucks am Eingang des Magnetventils (8) angeschaltet ist, der ein Signal erzeugt, wenn der Druck einen vorgegebenen kleinen Wert übersteigt und daß durch dieses Signal das Magnetventil (8) angesteuert wird.

8. Bremskraftverteiler nach einem der Ansprüche 1 - 7, dadurch gekennzeichnet, daß die Bremsen derart ausgelegt sind, daß nur geringe Anteile der idealen Bremskraftverteilerkennlinie (12) oberhalb der installierten Verteilerkennlinie (13) liegen und daß ein Druckbegrenzungsventil (15) in die Leitung zur Hinterradbremse eingeschaltet ist, das auch bei betätigten Magnetventil (8) wirksam ist.

## Claims

1. Electronically controlled braking force distributor for the brakes of a diagonally arranged vehicle wheel pair (5, 6), in which a magnetic valve (8) is connected into the brake conduit leading to the rear wheel brake, which magnetic valve (8) provides a through connection for the brake conduit in the activated condition and impairs the passage in the rest condition and which is activated by pulses which depend, in width or frequency, on the wheel slip of the two wheels (5, 6) for the purpose of generating less brake pressure at the rear wheels (6) to correspond to an at least approximately ideal braking force distribution at the rear wheels, a valve (in 8) being provided which permits an increase in brake pressure at the rear wheel (6) even in the case where the magnetic valve (8) is not activated, characterized in that up to a specified retardation (of approximately 0.5 g), the magnetic valve (8) is continuously activated, in that the passage then effective is dimensioned in such a way that a specified fixed matching straight line (13) determines the increase in brake pressure at the rear wheel (6), in that from this specified retardation (point A), the pulsed activation takes place, in that the valve (in 8) effective in the rest position of the magnetic valve (8) is a pressure limiting valve (in 8) dimensioned in such a way that it opens at a specified pressure difference Δp and then has a passage which brings about a pressure matching straight line (14) with the slope of the fixed matching straight line (13), and in that a common antilocking brake system brake pressure modulator is provided for both brakes.

2. Braking force distributor according to Claim 1, characterized in that the pressure limiting means (in 8) is dimensioned in such a way that the fixed matching straight line (14) meets the ideal braking force distribution characteristic (12) at a higher retardation than 0.5 g (approximately 0.85 g).

3. Braking force distributor according to Claim 1 or 2, characterized in that the continuous activation is initiated by the actuation of the brake pedal (1).

4. Braking force distributor according to Claim 1 or 2, characterized in that the continuous activation is initiated by switching on the ignition or by actuating the starter.

5. Braking force distributor according to Claim 1 or 2, characterized in that the continuous activation takes place by means of the signal of a switch connected onto the brake circuit.

6. Braking force distributor according to one of Claims 1 to 5, characterized in that the passage dimensioning of the magnetic valve (8) is selected in such a way that the fixed matching straight line (13) is selected to be steeper than usual.

7. Braking force distributor according to Claim 5, characterized in that a pressure sensor downstream of the magnetic valve is connected for measuring the pressure at the inlet to the magnetic valve (8) and this pressure sensor generates a signal when the pressure exceeds a specified small value and in that the magnetic valve (8) is activated by this signal.

8. Braking force distributor according to one of Claims 1-7, characterized in that the brakes are designed in such a way that only small proportions of the ideal braking force distributor characteristic (12) are located above the installed distributor characteristic (13) and in that a pressure limiting valve (15) is connected into the conduit to the rear wheel brake and is also effective when the magnetic valve (8) is actuated.

## Revendications

1. Répartiteur de force de freinage à commande électronique pour les freins d'une paire de roues de véhicule, en diagonale (5, 6), selon lequel la conduite de frein reliée au frein de la roue arrière comporte une électrovanne (8) qui débloque la conduite de frein lorsque cette électrovanne est à l'état actif alors qu'en position de repos elle limite le débit et est commandée par des impulsions dont la largeur ou la fréquence dépend du patinage des deux roues (5, 6) pour créer une pression de freinage plus réduite sur les roues arrière (6) en fonction d'une distribution au moins approximativement idéale de la force de freinage sur les roues arrière, une soupape étant prévue (en 8) qui même lorsque l'électrovanne (8) n'est pas commandée, autorise une montée de la pression de freinage sur la roue arrière (6), répartiteur caractérisé en ce que jusqu'à un freinage prédéterminé (correspondant à environ 0,5 g) l'électrovanne (8) est commandée en permanence et le débit alors autorisé est dimensionné pour qu'une droite (13) d'accord, fixe, prédéterminée définisse la montée en pression sur la roue arrière (6) et qu'à partir de ce freinage prédéterminé (point A), il y ait une commande impulsionnelle, et en ce que la soupape (dans l'électrovanne 8) active lorsque l'électrovanne (8) est en position de repos, est une soupape de limitation de pression (dans 8) dimensionnée pour s'ouvrir pour une différence de pression ΔP donnée et offrir un débit qui est défini par une droite (14) définissant la pression dont la pente correspond à la droite fixe (13) et pour les deux freins, il est prévu un modulateur commun de pression de frein ABS.

2. Répartiteur de force de freinage selon la revendication 1, caractérisé en ce que le moyen de limitation de pression (dans 8) est dimensionné pour que la droite (14) rencontre la courbe idéale de répartition de force de freinage (12) pour un freinage supérieur à celui correspondant à 0,5 g (c'est-à-dire d'environ 0,85 g).

3. Répartiteur de force de freinage selon la revendication 2, caractérisé en ce que la commande permanente est déclenchée par l'actionnement de la pédale de frein (1).

4. Répartiteur de force de freinage selon la revendication 1 ou 2, caractérisé en ce que la commande permanente est déclenchée par le branchement de l'allumage ou l'actionnement du démarreur.

5. Répartiteur de force de freinage selon la revendication 1 ou 2, caractérisé en ce que la commande permanente est déclenchée par le signal d'un commutateur relié au circuit de frein.

6. Répartiteur de force de freinage selon l'une des revendications 1 à 5, caractérisé en ce que le dimensionnement du passage de l'électrovanne (8) est choisi pour que la droite fixe (13) possède une pente plus raide que la pente habituelle.

7. Répartiteur de force de freinage selon la revendication 5, caractérisé par un capteur de pression en aval de l'électrovanne pour mesurer la pression à l'entrée de l'électrovanne (8) qui génère un signal lorsque la pression dépasse une petite valeur prédéterminée et commande l'électrovanne (8) par ce signal.

8. Répartiteur de force de freinage selon l'une des revendications 1 à 7, caractérisé en ce que les freins sont conçus pour que seulement de faibles parties de la courbe idéale de répartition ou de force de freinage (12) se situent au-dessus de la courbe de répartition installée (13) et qu'une soupape de limitation de pression (15) soit branchée dans la conduite reliée au frein de la roue arrière qui agit lorsque l'électrovanne (8) est actionnée.
